(19) Europäisches Patentamt European Patent Office Office européen des brevets

(11) **EP 4 417 357 B1**

(12) **EUROPEAN PATENT SPECIFICATION**

(45) Date of publication and mention of the grant of the patent:
**21.01.2026   Bulletin 2026/04**

(21) Application number: **22880759.0**

(22) Date of filing: **26.09.2022**

(51) International Patent Classification (IPC):
**B23K 26/70** (2014.01)       **B23K 26/00** (2014.01)
**B23K 26/03** (2006.01)

(52) Cooperative Patent Classification (CPC):
**B23K 26/00; B23K 26/032; B23K 26/707**

(86) International application number:
**PCT/JP2022/035687**

(87) International publication number:
**WO 2023/063063 (20.04.2023 Gazette 2023/16)**

(54) **PROTECTIVE GLASS DIRTINESS DETECTION DEVICE AND PROTECTIVE GLASS DIRTINESS DETECTION METHOD**

VORRICHTUNG ZUR ERKENNUNG VON SCHUTZGLASSCHMUTZ UND VERFAHREN ZUR ERKENNUNG VON SCHUTZGLASSCHMUTZ

DISPOSITIF DE DÉTECTION DE SALISSURE DE VERRE PROTECTEUR ET PROCÉDÉ DE DÉTECTION DE SALISSURE DE VERRE PROTECTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2021   JP 2021169725**

(43) Date of publication of application:
**21.08.2024   Bulletin 2024/34**

(73) Proprietor: **Amada Co., Ltd.**
**Isehara-shi, Kanagawa 259-1196 (JP)**

(72) Inventor: **AMANO, Tatsuya**
**Isehara-shi, Kanagawa 259-1196 (JP)**

(74) Representative: **Grünecker Patent- und Rechtsanwälte**
**PartG mbB**
**Leopoldstraße 4**
**80802 München (DE)**

(56) References cited:
| | |
|---|---|
| **EP-A1- 2 540 432** | **WO-A1-03/076117** |
| **WO-A1-03/076117** | **WO-A1-2020/246170** |
| **JP-A- 2018 075 610** | **JP-A- 2018 075 610** |
| **JP-A- 2020 151 752** | **JP-A- 2020 151 752** |
| **JP-A- 2020 179 405** | |

**Description**

The present invention relates to a protective glass contamination detection device and a protective glass contamination detection method, see claims 1 and 10.

[BACKGROUND ART]

Typically, a laser emission port of a laser processing head in a laser processing machine is equipped with a protective glass for protecting a focusing lens from contamination such as spatters (splashes), metal fume, or dust flying from a workpiece in a laser processing.

In the protective glass of the laser processing head, contamination adheres to the surface of the protective glass, and the amount of laser beam irradiation may decrease due to the contamination, thereby adversely affecting the processing quality. Therefore, it is necessary to clean or replace the protective glass depending on the condition of the contamination.

Patent Literature 1 describes a protective glass contamination detection device in which a photodetector is arranged, which senses scattered light scattered on an edge of the protective glass due to contamination particles adhered to the surface of the protective glass and light emission of the protective glass. The protective glass contamination detection device determines that the protective glass is dirty and displays a sign prompting to replace the protective glass, when a detection signal of the photodetector reaches a certain level (threshold).

[Citation List]

[Patent Literature]

[Patent Literature 1] Japanese Translation of PCT International Application Publication No. JP-T-2001-509889. JP2020151752A (disclosing the preamble of claims 1 and 10) shows a laser processing machine that prevents defects caused by contamination on protective glass by detecting scattered light intensity during laser processing.

EP2540432A1 mentions a laser processing machine with a detachable, interchangeable component and a control unit designed to assess the component's suitability for a processing operation using static, historical, and/or dynamic characteristic data of the component.

WO2003076117A1 describes a method and device designed to prevent dirt and contamination from adhering to optical components in laser beam machines, enhancing performance and reducing maintenance requirements.

JP2018075610A mentions an optical contamination detection method and apparatus for a laser processing head, which determines whether the protective glass needs replacement based on detection values from optical sensors positioned along the outer circumference of the glass.

[SUMMARY OF INVENTION]

The invention is defined according to the independent claims, namely a protective glass contamination detection device as defined in claim 1, and a protective glass contamination detection method as defined in claim 10.

The dependent claims recite advantageous embodiments of the present invention.

The protective glass contamination detection device disclosed in Patent Literature 1 detects contamination on the protective glass by utilizing the fact that the amount of scattered light scattered depending on the amount of the contamination on the surface of the protective glass increases and the level of the detection signal of the photodetector increases.

Here, as to the intensity of the scattered light of the protective glass, there is a certain intensity of the scattered light of the protective glass with respect to the incident light intensity of the laser beam incident on the protective glass, even when the protective glass has no contamination. When a foreign substance adheres to the protective glass, the intensity of the scattered light increases. Therefore, the intensity of the scattered light is doubled if the incident light intensity of the laser beam is doubled. Since the conditions such as the output of the laser beam, the duty ratio, the pulse frequency, and the beam diameter related to the incident light intensity of the laser beam incident on the protective glass are changed according to the processing conditions, the amount of the scattered light scattered depending on the amount of contamination on the surface of the protective glass is changed according to the processing conditions. For example, if the laser output is doubled according to the processing conditions, the amount of the scattered light is doubled, and the level of the detection signal of the photodetector is also doubled. Therefore, when the threshold of the contamination detection is a certain fixed value despite the change of the processing conditions, a degree of contamination on the protective glass may not be properly detected.

According to an aspect of the present invention, a protective glass contamination detection device configured to detect contamination on a protective glass for protecting a focusing lens for focusing a laser beam to irradiate the focused laser beam onto a workpiece in a laser processing machine, is defined in claim 1, and includes: a scattered light detection unit configured to detect scattered light caused by the contamination adhered to the protective glass; an information acquisition unit configured to acquire information on processing conditions of the laser processing machine; a contamination threshold setting unit configured to set a contamination threshold for detecting the contamination on the protective glass from a detection value detected by the scattered light detection unit based on the processing conditions of the laser processing machine; and a contamination determination unit configured to determine a degree of the contamination on the protective glass based on the detection value and the contamination threshold.

The contamination threshold setting unit sets a contamination threshold for detecting contamination on the protective glass based on the processing conditions of the laser processing machine. A contamination threshold suitable for the processing conditions can be set even when the amount of the scattered light scattered depending on the amount of the contamination on the surface of the protective glass changes according to the processing conditions.

[ADVANTAGEOUS EFFECTS OF INVENTION]

According to the present invention, a degree of contamination on the protective glass of the laser processing machine can be properly detected according to the processing conditions.

[BRIEF DESCRIPTION OF DRAWINGS]

[FIG. 1] FIG. 1 is a schematic configuration diagram illustrating a laser processing machine equipped with a protective glass contamination detection device implementing the present invention.
[FIG. 2] FIG. 2 is a schematic configuration diagram illustrating a protective glass 25 for a processing head 21 shown in FIG. 1.
[FIG. 3] FIG. 3 is an explanatory diagram illustrating how scattered light from an end face of the protective glass 25 with contamination 51 adhered is detected while laser beam is irradiated.
[FIG. 4] FIG. 4 is a block diagram explaining a configuration example of a protective glass contamination detection device implementing the present invention and an NC device 23.
[FIG. 5] FIG. 5 is a flowchart illustrating operation of a protective glass contamination detection device implementing the present invention.
[FIG. 6] FIG. 6 is a flowchart illustrating an example of a method of selecting a calculation formula for a warning threshold Wpk(N).
[FIG. 7] FIG. 7 is an explanatory diagram illustrating an example of a method of selecting a calculation formula for the warning threshold Wpk(N) based on the relationship between a pulse frequency F and a duty ratio D of a laser beam LB.
[FIG. 8] FIG. 8 is a graph illustrating changes in detection value X of a sensor 27 and a warning threshold Wpk(1) when the duty ratio of the laser beam is 30% and the pulse frequency is 10 Hz.
[FIG. 9] FIG. 9 is a graph illustrating changes in the detection value X of the sensor 27 and a warning threshold Wpk(2) when the duty ratio of the laser beam is 40% and the pulse frequency is 5000 Hz.
[FIG. 10] FIG. 10 is a graph illustrating changes in the detection value X of the sensor 27 and a warning threshold Wpk(3) when the duty ratio of the laser beam is 20% and the pulse frequency is 100 Hz.
[FIG. 11] FIG. 11 is a graph illustrating changes in the detection value X of the sensor 27 and a warning threshold Wpk(4) when the duty ratio of the laser beam is 40% and the pulse frequency is 500 Hz.

[DESCRIPTION OF EMBODIMENTS]

Hereinafter, a protective glass contamination detection device and a protective glass contamination detection method according to an embodiment will be described with reference to the drawings. In the description of the drawings, the same reference numerals are given to the same parts, and the description thereof will be omitted.

[Configuration of the laser processing machine]

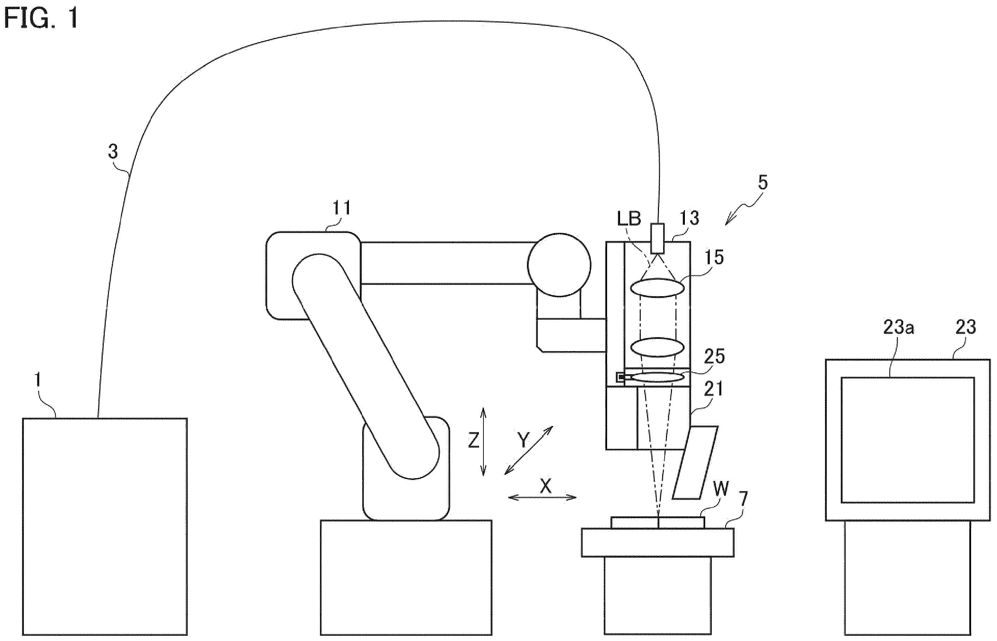

FIG. 1 is a schematic configuration diagram showing a laser processing machine equipped with a protective glass contamination detection device implementing the present invention.

As shown in FIG. 1, in this laser processing machine, a laser beam LB generated by a laser oscillator 1 for generating a laser beam LB is sent to a laser processing unit 5 via a process fiber 3, and the laser processing unit 5 focuses the laser beam LB to a high energy density and irradiates a workpiece W made of various materials for processing. The workpiece W is a mild steel plate, for example. The workpiece W may be an iron-based sheet metal other than a mild steel plate such as stainless steel, or a sheet metal such as aluminum, aluminum alloy, or copper steel. In the present embodiment, a laser processing machine equipped with a contamination detection device implementing the present invention is described as a welding machine for welding the workpiece W by the laser beam LB, but the laser processing machine may be a cutting machine for cutting the workpiece W by the laser beam LB. The type of the laser processing machine is not particularly limited.

A laser oscillator 1 generates and emits the laser beam LB. A laser oscillator 1 is preferably a laser oscillator which emits a laser beam of a predetermined wavelength by amplifying excitation light emitted from a laser diode or a laser oscillator which directly utilizes a laser beam emitted from the laser diode. The laser oscillator 1 is a solid-state laser oscillator, a fiber laser oscillator, a disk laser oscillator, and a direct diode laser oscillator (DDL oscillator), for example.

As a specific laser wavelength of a laser diode beam, for example, the laser wavelength of the laser beam emitted by a fiber laser oscillator, or a disk laser oscillator is typically from 1,060 nm to 1,080 nm, and the laser wavelength of the laser beam emitted by the DDL oscillator is in a range of 300 nm to 1,000 nm.

The process fiber 3 transmits the laser beam LB emitted from the laser oscillator 1 to the laser processing unit 5.

The laser processing unit 5 welds the workpiece W using the laser beam LB transmitted by the process fiber 3. The laser processing unit 5 includes a processing table 7 on which a workpiece W is mounted, a robot 11, and a collimator unit 13. The robot 11 is composed of multiple axes (6 axes), and the collimator unit 13 is movable in an X-axis direction, a Y-axis direction, and a Z-axis direction. The collimator unit 13 is configured to be oriented at any angle.

The collimator unit 13 irradiates the workpiece W with the laser beam LB transmitted by the process fiber 3. The collimator unit 13 includes a collimating lens 15 for converting the laser beam LB emitted from the process fiber 3 into a substantially parallel light flux, and a focusing lens 19 for focusing the laser beam LB converted into a substantially parallel light flux. The collimating lens 15 and the focusing lens 19 are arranged with the optical axis adjusted beforehand. The beam diameter of the laser beam LB during irradiation of an upper surface of the workpiece W with the laser beam LB is variable from a beam waist diameter to the beam diameter greater than the beam waist diameter by changing the beam diameter or the focus position by use of an optical system element.

The collimator unit 13 includes a processing head 21 that emits the laser beam LB on the workpiece W. The collimator unit 13 is fixed to the robot 11 and is movable in an X-axis direction, a Y-axis direction, and a Z-axis direction. The processing head 21 can be oriented at any angle. Therefore, the processing head 21, that is, the position at which the workpiece W is irradiated with the laser beam LB, can be moved along a surface (X-axis direction and Y-axis direction) of the workpiece W. Instead of the processing head 21 being moved along the surface of the workpiece W, the workpiece W may be moved while the position of the processing head 21 is fixed. That is, it is only necessary to have a configuration in which the processing head 21 is moved relative to the surface of the workpiece W.

Note that the laser processing machine is driven and controlled by a numerical control (NC) device 23 and a programmable logic controller (PLC) 29, which will be described later.

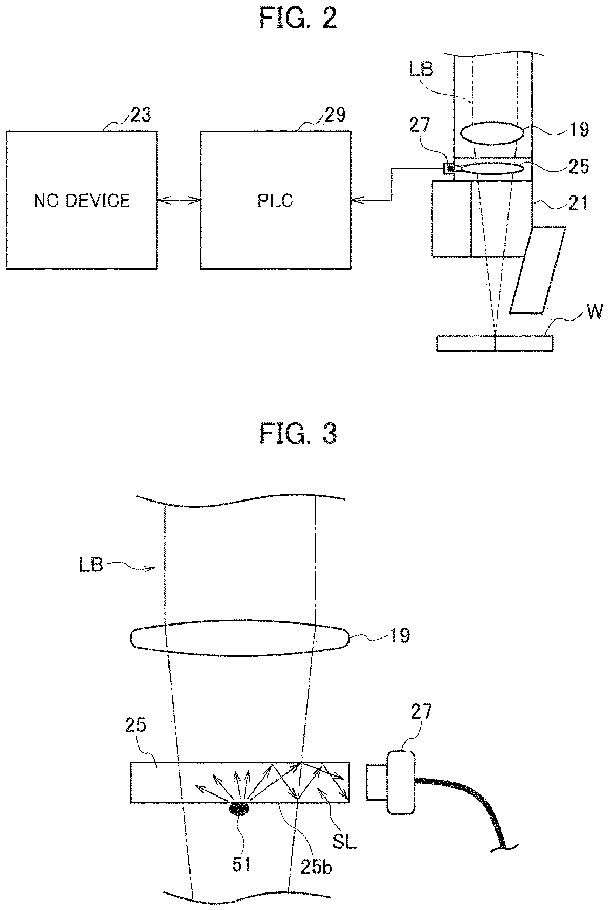

FIG. 2 is a schematic configuration diagram of a protective glass 25 for the processing head 21 shown in FIG. 1.

A mechanism for supplying shield gas to prevent nitriding and oxidation can be selected for the processing head 21 according to the processing contents. A protective glass 25 is provided between the focusing lens 19 and the workpiece W in the processing head 21 to protect the focusing lens 19 from contamination such as spatters (splashes), metal fume, and dust flying from the workpiece W in laser processing. Further, the processing head 21 may include an air knife mechanism to prevent contamination such as spatters (splashes), metal fume, and dust flying from the workpiece W from entering the processing head 21 in laser processing.

The protective glass 25 is detachably attached to the processing head 21 in a state of being stored in a protective glass folder for storing the protective glass 25. The protective glass 25 can be easily replaced by taking out the protective glass folder from the processing head 21.

At an end of the protective glass 25, a sensor 27 is provided that receives scattered light SL from an end surface of the protective glass 25 attached to the processing head 21. The sensor 27 detects scattered light SL caused by the contamination 51 adhered to the protective glass 25. The detection signal from the sensor 27 is sent to the PLC 29 which sequentially controls a process for determining the level of contamination on the protective glass 25.

FIG. 3 is an explanatory diagram showing how scattered light from an end face of the protective glass 25 with the contamination 51 adhered is detected while laser beam is irradiated.

As shown in FIG. 3, when the contamination 51 adheres to a lower surface 25b of the protective glass 25 during laser processing by irradiating the laser beam LB, the laser beam LB from the focusing lens 19 hits the contamination 51, and scattered light SL is generated. The sensor 27 detects the scattered light SL emitted from the end face of the protective glass 25. That is, the sensor 27 detects the scattered light amount emitted from the end face of the protective glass 25. Note that the sensor 27 continuously detects the scattered light amount during laser processing.

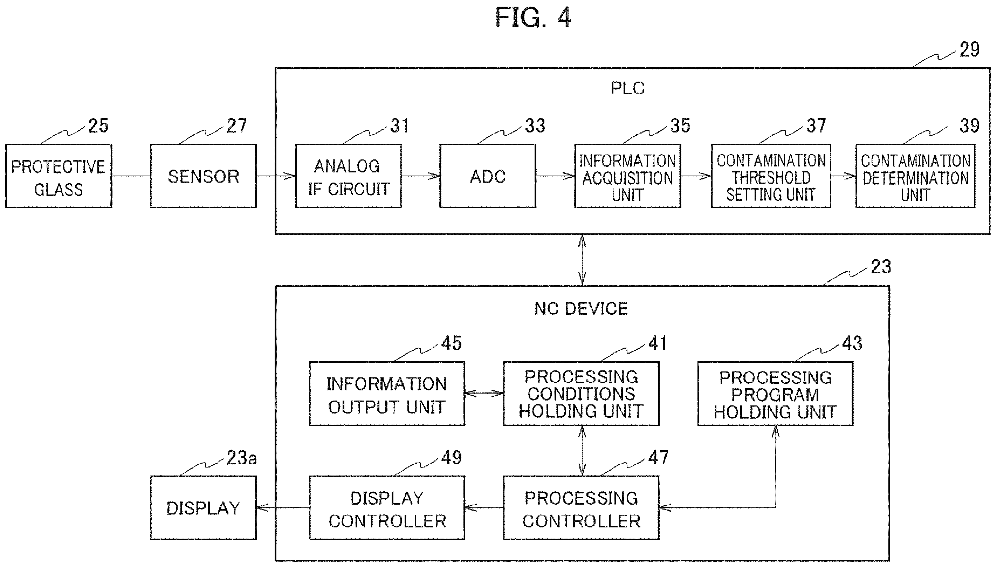

FIG. 4 is a block diagram showing a configuration example of the protective glass contamination detection device implementing the present invention and the NC device 23.

In the present embodiment, the protective glass contamination detection device includes a sensor 27 and a PLC 29, and the PLC 29 is connected to the NC device 23. The protective glass contamination detection device detects the contamination 51 on the protective glass 25 for protecting the focusing lens 19 for focusing the laser beam LB and irradiating the workpiece from the contamination in the laser processing machine. The protective glass contamination detection device includes: a scattered light detection unit (sensor 27) configured to detect scattered light caused by the contamination adhered to the protective glass 25; an information acquisition unit 35 configured to acquire information on the processing conditions of the laser processing machine; a contamination threshold setting unit 37 configured to set a contamination threshold for detecting the contamination on the protective glass 25 from the detection value detected by the scattered light detection unit based on the processing conditions of the laser processing machine; and a contamination determination unit 39 configured to determine a degree of the contamination on the protective glass 25 based on the detection value and the contamination threshold.

As shown in FIG. 4, the PLC 29 includes: an analog intermediate frequency (IF) circuit 31; an analog to digital (AD) converter 33; an information acquisition unit 35; a contamination threshold setting unit 37; and a contamination determination unit 39.

The analog IF circuit 31 amplifies a detection signal from the sensor 27 to cut a high-frequency component (noise). The AD converter 33 converts the analog signal from the analog IF circuit 31 into a digital signal and outputs as a detection value X.

The information acquisition unit 35 acquires the detection value X from the AD converter 33. The information acquisition unit 35 acquires from the NC device 23 information on whether the NC device 23 has started laser processing and whether the laser processing has been completed. Further, the information acquisition unit 35 acquires information on the processing conditions of the laser processing machine from the NC device 23. The processing conditions of the laser processing machine include items for adjusting an average output Pav per unit time of the laser beam LB emitted while processing and an area of the laser beam LB irradiating the protective glass 25 while processing. The average output Pav per unit time indicates the output of the laser beam LB irradiating the workpiece W in a unit time determined by the laser output of the laser beam LB emitted while processing, the pulse frequency, and the duty ratio given by dividing a pulse width by the pulse period.

When only the average output Pav of the laser beam LB per unit time is changed, the amount of laser energy with which the protective glass 25 is irradiated and the amount of laser energy with which the workpiece W is irradiated are in a proportional relationship. Meanwhile, the change in the irradiation area of the laser beam LB irradiating the protective glass 25 and the change in the irradiation area of the laser beam LB irradiating the workpiece W are not necessarily in a proportionally relationship, as can be understood when the beam waist is set above the workpiece W, for example. Therefore, the change in the laser output of the laser beam LB and the irradiation area of the laser beam LB irradiating the protective glass 25 should be separately adjusted and adopted for the contamination detection for the protective glass. Therefore, the adjustment of the irradiation area of the laser beam LB irradiating the protective glass 25 indicates the adjustment of how to handle the irradiation area of the laser beam LB irradiating the protective glass 25 in view of the difference between the irradiation area of the laser beam LB for the workpiece W and the irradiation area for the protective glass 25.

The processing conditions of the laser processing machine acquired by the information acquisition unit 35 include laser conditions of the laser beam LB emitted while processing. The laser conditions include a laser peak output value P (kW) of the laser beam LB, a pulse frequency F, a duty ratio D, and a gain correction value G determined by the beam diameter of the laser beam LB. The values of the laser peak output value P, the pulse frequency F, the duty ratio D, and the gain correction value G are not constant and are changed by the laser conditions. The gain correction value G determined by the beam diameter of the laser beam LB indicates as a coefficient a degree of changes in the beam diameter from the case where the beam diameter of the laser beam LB is the beam waist diameter to the case where the beam diameter is greater than the beam waist diameter due to the beam diameter change or focus position change by the optical system element during irradiation of the upper surface of the workpiece W with the laser beam LB. The gain correction value G does not have to be directly related to the physical quantity. The gain correction value G does not have to be directly related to the physical quantity.

The irradiation area of the laser beam LB irradiating the protective glass 25 caused by the gain correction value G is understood as follows. That is, the gain correction value G indicates a degree of change of the beam diameter with which the workpiece W is irradiated as a coefficient. As the degree of change of the beam diameter, the beam diameter may be changed by an optical system element which changes the beam parameter product (BPP) or the beam diameter may be changed by an optical system element which changes the beam diameter without changing the BPP. The beam diameter may be changed by a combination thereof. In such a change of the gain correction value G, the irradiation area of the laser beam LB irradiating the workpiece W and the irradiation area of the laser beam LB irradiating the protective glass 25 are not necessarily based on a certain law (a law such as proportionality). The change of the gain correction value G may be obtained by adjusting how the irradiation area of the laser beam LB irradiating the protective glass 25 is handled for each case.

The processing conditions of the laser processing machine acquired by the information acquisition unit 35 include sensor characteristics of the sensor 27. The sensor characteristics of the sensor 27 include an initial voltage V0 (V) of the sensor 27, sensor rise time tr (msec), sensor fall time tf (msec), and a variable "s" determined by the response time of the sensor 27 and a sampling frequency of the detection signal of the sensor 27. The sensor rise time tr (msec) is the time required for the detection signal of the sensor 27 to reach a peak value from an initial voltage V0. The sensor fall time tf is the time required for the detection signal of the sensor 27 to fall from the peak value to the initial voltage V0 (V). The values of the initial voltage V0, the sensor rise time tr, the sensor drop time tf, and the variable "s" are not constant and are changed by the sensor characteristics. For example, even when the response of the photo diode (PD) chip is high, the speed at which the sensor 27 can stably output the signal is a speed that takes into account the inductance of the lead wire of each component such as the operational amplifier, the parasitic capacitance due to the feedback resistor, and the floating capacitance. Therefore, the sensor rise time tr and the sensor fall time tf require a certain amount of time according to their specifications and costs.

Further, the processing conditions of the laser processing machine acquired by the information acquisition unit 35 include information on the mechanical specifications of the laser processing machine emitting the laser beam LB. The information on the mechanical specifications of the laser processing machine includes an arbitrary variable "a" determined by the characteristics of the protective glass 25 to be used and an arbitrary variable "b" determined by the mechanical specifications and the sensor specifications of the sensor 27. The values of the arbitrary variables "a" and "b" are not constant and are changed by the mechanical specifications of the laser processing machine and the sensor specifications of the sensor 27. The arbitrary variable "b" is a variable that specifies the switching timing of the contamination threshold calculation formulas Wpk(3) and Wpk(4), which will be described later.

The contamination threshold setting unit 37 sets a contamination threshold for detecting the contamination 51 of the protective glass 25 from the detection value X of the scattered light SL detected by the sensor 27 based on the processing conditions of the laser processing machine acquired from the NC device 23. A contamination threshold setting unit 37 selects a calculation formula of the contamination threshold for setting the contamination threshold based on the processing conditions of the laser processing machine. The contamination threshold setting unit 37 calculates the contamination threshold based on the selected calculation formula of the contamination threshold. The contamination threshold setting unit 37 sets the contamination threshold for determining the level of the contamination on the protective glass 25.

The significance of setting the contamination threshold based on the processing conditions of the laser processing machine will now be explained.

For example, when the laser conditions are changed and the pulse frequency F and the duty ratio D of the laser beam LB are changed during detection of the contamination 51 of the protective glass 25, the average output Pav of the laser beam LB also changes. When the average output Pav of the laser beam LB changes, the incident light intensity of the laser beam LB incident on the protective glass 25 changes, and the amount of the scattered light SL that is scattered depending on the amount of the contamination 51 also changes. In this case, the detection value X of the sensor 27 changes depending on the laser conditions even if the contamination 51 on the surface of the protective glass 25 is the same. Therefore, the detection of the protective glass contamination can be corrected to a constant sensitivity, and the degree of the contamination on the protective glass 25 can be properly detected by setting the contamination threshold of the protective glass 25 based on the laser conditions.

Further, the detection value X of the sensor 27 is changed depending on the sensor characteristics and the mechanical specifications of the laser processing machine even when the contamination 51 on the surface of the protective glass 25 is the same, for example, in such cases when the sensor characteristics of the sensor 27 are changed and the peak value of the output voltage of the sensor 27 varies, and when the mechanical specifications of the laser processing machine are changed, and the characteristics of the protective glass 25 and the nozzle diameter of the processing head 21 vary. Therefore, the detection of contamination on the protective glass can be corrected to the certain sensitivity, and the degree of the contamination on the protective glass can be detected more properly by setting the contamination threshold of the protective glass 25 based on the sensor characteristics of the sensor 27 and the mechanical specifications of the laser processing machine. The degree of the contamination on the protective glass can be detected appropriately by setting the contamination threshold based on the processing conditions of the laser processing machine.

Specifically, the contamination threshold setting unit 37 selects a calculation formula for the contamination threshold by determining whether the processing conditions of the laser processing machine acquired from the NC device 23 satisfy a pre-stored formula. The contamination threshold for detecting the contamination 51 of the protective glass 25 is calculated based on the selected calculation formula for the contamination threshold.

In the present embodiment, the contamination threshold setting unit 37 sets a warning threshold Wpk(N) and an alarm threshold Apk(N) as the contamination thresholds. The warning threshold Wpk(N) is a contamination threshold for determining the contamination that does not cause obvious trouble in laser processing, but affects the processing quality depending on the type of processing. Further, the alarm threshold Apk(N) is a contamination threshold value for determining contamination requiring replacement of the protective glass 25 since laser processing is hindered. The alarm threshold Apk(N) is calculated by multiplying the warning threshold Wpk(N) by an arbitrary variable "c". The details of the method for selecting the formula for calculating the warning threshold Wpk(N) and the calculation method of the warning threshold Wpk(N) will be described later.

The contamination determination unit 39 determines the degree of contamination on the protective glass 25 based on the detection value X of the sensor 27 and the contamination threshold set by the contamination threshold setting unit 37. Specifically, the contamination determination unit 39 determines whether the detection value X exceeds the warning threshold Wpk(N) set by the contamination threshold setting unit 37. The contamination determination unit 39 determines whether the detection value X exceeds the alarm threshold Apk(N) when the detection value X exceeds the warning threshold Wpk(N).

The contamination determination unit 39 determines that the degree of the contamination on the protective glass 25 is at a level requiring attention and transmits a warning determination signal to the NC device 23 when the detection value X exceeds the warning threshold Wpk(N) and is less than or equal to the alarm threshold Apk(N). The contamination determination unit 39 determines that the degree of contamination on the protective glass 25 is at a level requiring replacement of the protective glass 25 and transmits an alarm determination signal to the NC device 23 when the detection value X exceeds the warning threshold Wpk(N) and the alarm threshold Apk(N).

Next, the NC device 23 will be described. The NC device 23 is a control device for controlling each part of a laser processing machine. The NC device 23 is composed of a computer and includes a central processing unit (CPU), a read-only memory (ROM), and a random-access memory (RAM). The NC device 23 includes a display 23a for displaying various kinds of information, and displays information on detection of contamination on the protective glass 25 and the like through the display 23a together with drive control of the laser processing machine, as described later.

The NC device 23 realizes various functions by the CPU reading various programs from the ROM, expanding them into the RAM, and executing the expanded programs. As shown in FIG. 4, the NC device 23 includes functions as a processing conditions holding unit 41, a processing program holding unit 43, an information output unit 45, a processing controller 47, and a display controller 49.

The processing conditions holding unit 41 holds the processing conditions of the laser processing machine. The processing conditions of the laser processing machine held by the processing conditions holding unit 41 include laser conditions of the laser beam LB emitted while processing, sensor characteristics of the sensor 27, and information on machine specifications of the laser processing machine emitting the laser beam LB.

The information output unit 45 outputs information on whether the NC device 23 has started laser processing and finished laser processing to the PLC 29. Further, the information output unit 45 outputs various kinds of information on the processing conditions of the laser processing machine held by the processing conditions holding unit 41 to the PLC 29.

The processing program holding unit 43 holds the processing program. The NC device 23 defines the operation of the robot 11 by teaching, sets the behavior of the processing head 21, and creates the processing program. Further, the processing program held by the processing program holding unit 43 may be created by an external device such as a computer-aided manufacturing (CAM), and the processing program holding unit 43 may acquire the processing program from the external device. The external device may store the created processing program in a database of an unillustrated data management server. In this case, the processing program holding unit 43 acquires the processing program by reading the processing program stored in the database of the data management server.

The processing program includes codes that define the operation of the laser processing machine body 50 necessary to weld the workpiece W sequentially along a plurality of paths to weld the product.

The processing program includes codes that define a series of operations of the laser processing machine required to weld the product, such as setting the processing conditions, starting of the laser beam LB and stopping emission of the laser beam LB, moving the processing head 21 for each element, and moving from path to path. When welding the product, the welding is performed by moving the processing head 21 (laser beam LB) from a specific spot of the product along a welding track corresponding to an inner and outer periphery. When welding a plurality of products from the workpiece W, codes are described for each of the plurality of products in the processing program.

The processing controller 47 executes the processing program to control the laser processing machine. Further, the processing controller 47 stops the processing by the laser processing machine when an alarm determination signal is received from the PLC 29.

The display controller 49 causes the display 23a to display information based on the determination result of the degree of the contamination on the protective glass 25 based on the determination signal from the PCL 29. The display controller 49 causes the display 23a to display a warning sign such as a contamination warning, based on the warning determination signal from the PCL 29. In addition, the display controller 49 causes the display 23a to display an alarm sign such as prompting replacement of protective glass 25, based on the alarm determination signal from the PCL 29. As a result, the operator can instantly and easily determine that the protective glass 25 needs to be replaced due to the contamination on the protective glass 25 in laser processing, and can prevent deterioration of the processing quality by replacing the protective glass 25.

[Operation of the protective glass contamination detection device]

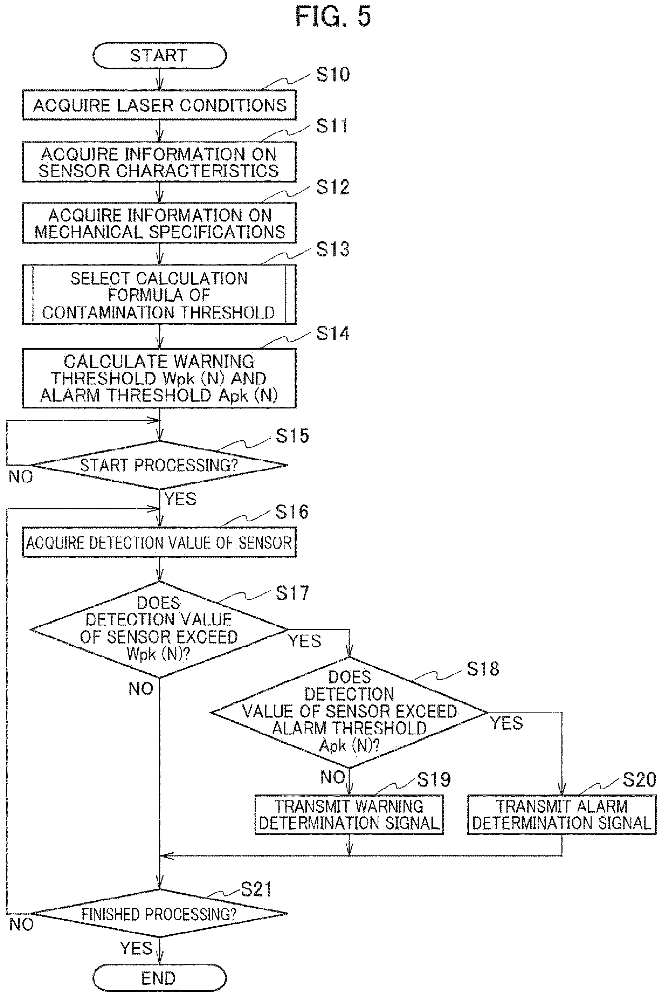

Next, an operation of the protective glass contamination detection device implementing the present invention will be described with reference to FIG. 5.

FIG. 5 is a flowchart of an operation of the protective glass contamination detection device implementing the present invention.

In step S10 in FIG. 5, the information acquisition unit 35 acquires the laser conditions of the laser beam LB emitted while processing from the NC device 23. The information acquisition unit 35 acquires a laser peak output value P of the laser beam LB emitted while processing as a laser condition of the laser beam LB, a pulse frequency F of the laser beam LB, a duty ratio D of the laser beam LB, and a gain correction value G determined by the beam diameter of the laser beam LB.

Proceeding to step S11, an information acquisition unit 35 acquires information on sensor characteristics of the sensor 27 from the NC device 23. The information acquisition unit 35 acquires the initial voltage V0 of the sensor 27, the sensor rise time tr, the sensor fall time tf, and the variable "s" determined by the response time of the sensor 27 and the sampling frequency of the detection signal, as information on sensor characteristics of the sensor 27.

Proceeding to step S12, the information acquisition unit 35 acquires information on the mechanical specifications of the laser processing machine for emitting the laser beam LB from the NC device 23. The information acquisition unit 35 acquires an arbitrary variable "a" determined by the characteristics of the protective glass 25 and an arbitrary variable "b" determined by the mechanical specifications and the sensor specifications of the sensor 27 as information on the mechanical specifications of the laser processing machine.

Proceeding to step S13, the contamination threshold setting unit 37 selects a calculation formula of the contamination threshold for setting the contamination threshold based on the laser conditions of the laser beam LB emitted while processing, information on the sensor characteristics of the sensor 27, and information on the mechanical specifications of the laser processing machine. The contamination threshold setting unit 37 calculates the warning threshold Wpk(N) and the alarm threshold Apk (N), and sets them as the contamination thresholds.

(Method for selecting a calculation formula for a contamination threshold)

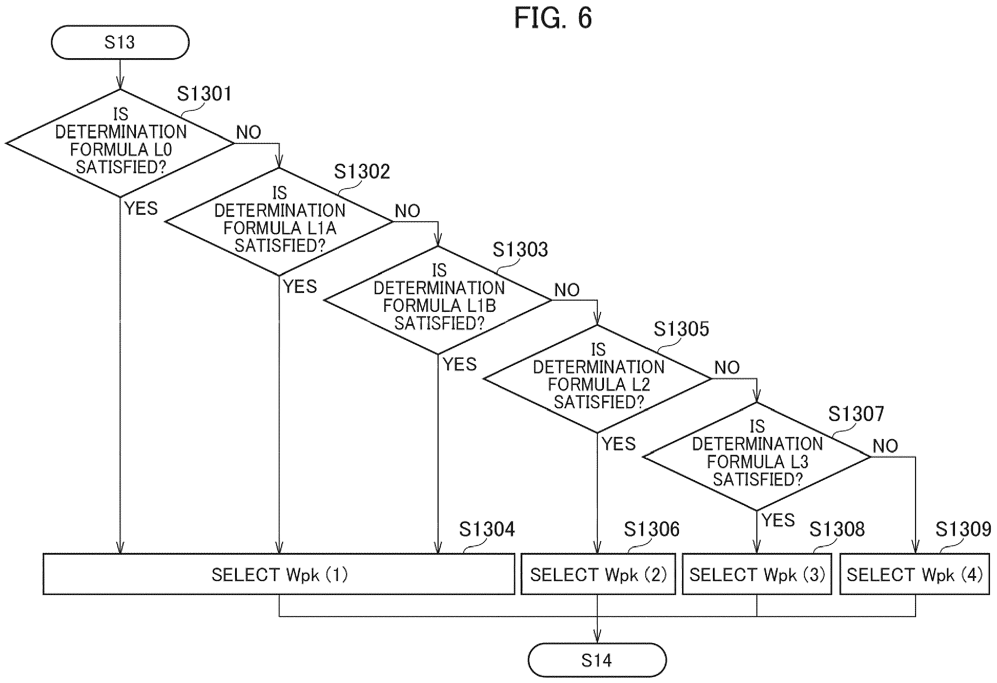

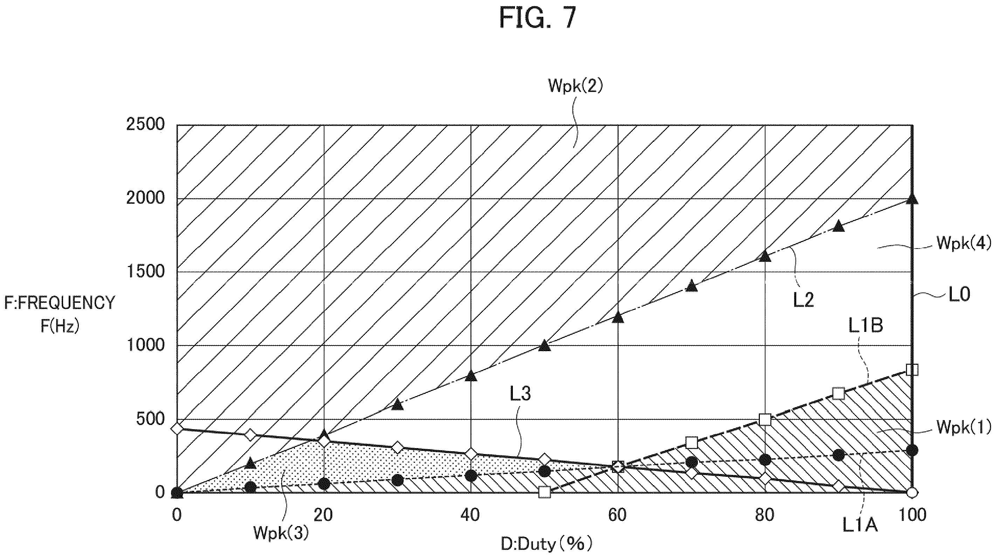

An example of the method for selecting calculation formula for contamination threshold will now be described with reference to FIGS. 6 and 7.

FIG. 6 is a flowchart showing an example of a method of selecting a calculation formula for a warning threshold Wpk(N). FIG. 7 is a diagram showing an example of the method for selecting a calculation formula for a warning threshold Wpk(N) based on the relationship between a pulse frequency F and a duty ratio D of laser beam LB. In the present embodiment, the contamination threshold setting unit 37 selects calculation formula for the warning threshold Wpk(N) based on the relationship between the pulse frequency F of laser beam LB and the duty ratio D of laser beam LB.

The contamination threshold setting unit 37 successively determines whether the processing conditions of the laser processing machine satisfy the five determination formulas L0, L1A, L1B, L2, and L3, and selects a calculation formula for the warning threshold Wpk(N) from Wpk(1) to Wpk(4), which are four pre-stored calculation formulas. Details of Wpk(1) to Wpk(4), which are the calculation formulas for the warning threshold Wpk(N), will be described later.

First, in step S1301 in FIG. 6, the contamination threshold setting unit 37 determines whether the value of the duty ratio D among the acquired laser conditions satisfies the determination formula L0 shown in formula (1) below.
[Formula 1]

$$D=100 \quad \ldots \quad (1)$$

Proceeding to step S1304, the contamination threshold setting unit 37 selects Wpk(1) as the calculation formula of the warning threshold Wpk(N) when the laser conditions satisfy the determination formula L0 (YES in step S1301), that is, when the duty ratio D of the laser beam LB is 100. Meanwhile, when the laser conditions do not satisfy the determination formula L0, that is, when the duty ratio D of the laser beam LB is not 100 (NO in step S1301), the process proceeds to step S1302.

In step S1302, the contamination threshold setting unit 37 determines whether the pulse frequency F of the laser beam LB, the duty ratio D of the laser beam LB, and the sensor rise time tr among the acquired laser conditions and sensor characteristics of the sensor 27 satisfy the determination formula L1A shown in formula (2) below.
[Formula 2]

$$F \leq D \times 10/tr \quad \ldots \quad (2)$$

Proceeding to step S1304, the contamination threshold setting unit 37 selects Wpk(1) as the calculation formula of the warning threshold Wpk(N) when the laser conditions and the sensor characteristics of the sensor 27 satisfy the determination formula L1A (YES in step S1302). Meanwhile, when the laser conditions and the sensor characteristics of the sensor 27 do not satisfy the determination formula L1A (NO in step S1302), the process proceeds to step S1303.

In step S1303, the contamination threshold setting unit 37 determines whether the pulse frequency F of the laser beam LB, the duty ratio D of the laser beam LB, the sensor rise time tr, the sensor fall time tf, and the arbitrary variable "b" among the acquired laser conditions, the sensor characteristics of the sensor 27, and the mechanical specifications of the laser processing machine satisfy the determination formula L1B shown in formula (3) below.
[Formula 3]

$$F \leq \{10 \times D(tr+tf) - 1000 \times tr\} / \{tf \times (tr-b)\} \ \ldots \ (3)$$

Proceeding to step S1304, the contamination threshold setting unit 37 selects Wpk(1) as the calculation formula of the warning threshold Wpk(N) when the laser conditions, the sensor characteristics of the sensor 27, and the mechanical specifications of the laser processing machine satisfy the determination formula L1B (YES in step S1303). Meanwhile, when the sensor characteristics of the sensor 27 and the mechanical specifications of the laser processing machine do not satisfy the determination formula L1B (NO in step S1303), the process proceeds to step S1305.

That is, as shown in FIG. 7, Wpk(1) is used as the calculation formula of the warning threshold Wpk(N) in the range in which the relationship between the pulse frequency F of the laser beam LB and the duty ratio D of the laser beam LB satisfies the determination formula L0, L1A or L1B. Note that the pulse on time t_on (msec) of the detection value X of the sensor 27 for detecting the contamination 51 adhered to the protective glass 25 is sufficiently long with respect to the sensor rise time tr when the relationship between the pulse frequency F of the laser beam LB and the duty ratio D of the laser beam LB satisfies the determination formula L0, L1A or L1B.

In step S1305, the contamination threshold setting unit 37 determines whether the pulse frequency F of the laser beam LB, the duty ratio D of the laser beam LB and the variable "s" among the acquired laser conditions and the sensor characteristics of the sensor 27 satisfy the determination formula L2 shown in (4) below.
[Formula 4]

$$F \geq D \times 10 / s \ \ldots \ (4)$$

Proceeding to step S1306, the contamination threshold setting unit 37 selects Wpk(2) as the calculation formula of the warning threshold Wpk(N) when the laser conditions and the sensor characteristics of the sensor 27 satisfy the determination formula L2 (YES in step S1305). Meanwhile, when the laser conditions and the sensor characteristics of the sensor 27 do not satisfy the determination formula L2 (NO in step S1305), the process proceeds to step S1307.

That is, as shown in FIG. 7, Wpk(2) is used as the calculation formula of the warning threshold Wpk(N) in the range in which the relationship between the pulse frequency F of the laser beam LB and the duty ratio D of the laser beam LB does not satisfy the determination formulas L0, L1A, and 1B and satisfies the determination formula L2. Note that the pulse on time t_on of the detection value X of the sensor 27 for detecting the contamination 51 adhered to the protective glass 25 is short with respect to the sensor rise time tr when the relationship between the pulse frequency F of the laser beam LB and the duty ratio D of the laser beam LB does not satisfy the determination formulas L0, L1A, and L1B and satisfies the determination formula L2.

In step S1307, the contamination threshold setting unit 37 determines whether the pulse frequency F of the laser beam LB, the duty ratio D of the laser beam LB, and the arbitrary variable "b" among the acquired laser conditions, the sensor characteristics of the sensor 27, and the mechanical specifications of the laser processing machine satisfy the determination formula L3 shown in (5) below.
[Formula 5]

$$F \geq (1000 - D \times 10) / b \ \ldots \ (5)$$

Proceeding to step S1308, the contamination threshold setting unit 37 selects Wpk(3) as the calculation formula of the warning threshold Wpk(N) when the laser conditions, the sensor characteristics of the sensor 27, and the mechanical specifications of the laser processing machine satisfy the determination formula L3 (YES in step S1307). Meanwhile, when the sensor characteristics of the sensor 27 and the mechanical specifications of the laser processing machine do not satisfy the determination formula L3 (NO in step S1307), the process proceeds to step S1309.

That is, as shown in FIG. 7, Wpk(3) is used as the calculation formula of the warning threshold Wpk(N) in the range in which the relationship between the pulse frequency F of the laser beam LB and the duty ratio D of the laser beam LB does not satisfy the determination formulas L0, L1A, L1B, L2 and satisfies the determination formula L3. Note that the pulse on time t_on of the detection value X of the sensor 27 for detecting the contamination 51 adhering to the protective glass 25 is short and the pulse off time t_off is long with respect to the sensor rise time tr when the relationship between the pulse frequency F of the laser beam LB and the duty ratio D of the laser beam LB does not satisfy the determination formulas L0, L1A, L1B, L2 and satisfies the determination formula L3.

In step S1309, the contamination threshold setting unit 37 selects Wpk(4) as the calculating formula for the warning threshold Wpk(N).

That is, as shown in FIG. 7, Wpk(4) is used as the calculation formula for the warning threshold Wpk(N) in the range in which the relationship between the pulse frequency F of the laser beam LB and the duty ratio D of the laser beam LB does not satisfy any of the determination formulas L0, L1A, L1B, L2, and L3. Note that the pulse on time t_on of the detection value X of the sensor 27 for detecting the contamination 51 adhered to the protective glass 25 is short and the pulse off time t_off is also short with respect to the sensor rise time tr when the relationship between the pulse frequency F of the laser beam LB and the duty ratio D of the laser beam LB does not satisfy any of the determination formulas L0, L1A, L1B, L2, and L3.

Returning to step S14 in FIG. 5, the contamination threshold setting unit 37 calculates the warning threshold Wpk(N) and the alarm threshold Apk(N) using the calculation formula selected in step S13, and sets them as the contamination thresholds.

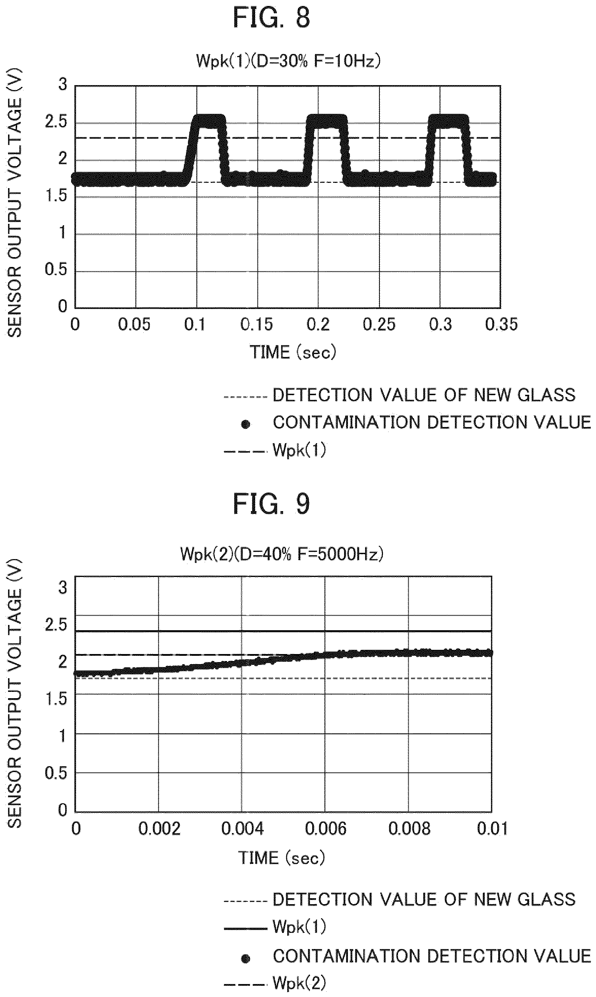

The calculation method of the warning threshold Wpk(N) and the alarm threshold Apk(N) will be described with reference to FIGS. 8 to 11. FIGS. 8 to 11 are graphs showing changes in the detection value X (sensor output voltage) of the sensor 27 and the warning threshold Wpk(N). In FIGS. 8 to 11, it is assumed that the average output Pav of the laser beam LB, the beam diameter of the laser beam LB, the sensor characteristics and the mechanical specifications of the sensor 27 are the same.

In the present embodiment, the warning threshold value Wpk(N) is calculated based on the common formula shown in formula (6) below. That is, Wpk(1) to Wpk(4) differ only in k(N) of the common formula shown in formula (6).

[Formula 6]

$$Wpk(N)=P\times a\times k(N)\times G+V0 \ \ldots \ (6)$$

The alarm threshold Apk(N) is calculated by multiplying Wpk(N) by an arbitrary variable "c" as shown in formula (7) below. The arbitrary variable "c" only have to be a value greater than 1, and is set to 1.5, for example.

[Formula 7]

$$Apk(N)=Wpk(N)\times c \ \ldots \ (7)$$

FIG. 8 is a graph showing changes in the detection value X (sensor output voltage) of the sensor 27 and a warning threshold Wpk(1) when the duty ratio of the laser beam is 30% and the pulse frequency is 10 Hz. In FIG. 8, Wpk(1) is selected as a calculation formula for the warning threshold Wpk(N).

In FIG. 8, the pulse-on time t_on of the contamination detection value, which is the detection value X of the sensor 27 for detecting the contamination 51 on the protective glass 25, is sufficiently long with respect to the sensor rise time tr. In this case, the value of the maximum voltage obtained by changing the pulse frequency F and the duty ratio D of the laser beam LB is calculated as the warning threshold Wpk(N) according to Wpk(1) shown in formula (8) below. Wpk(1) is a calculation formula in which K(1) in the common formula is 1.

[Formula 8]

$$Wpk(1)=P\times a\times 1\times G+V0 \ \ldots \ (8)$$

FIG. 9 is a graph showing changes in the detection value X (sensor output voltage) of the sensor 27 and a warning threshold Wpk(2) when the duty ratio of the laser beam is 40% and the pulse frequency is 5000 Hz. In FIG. 9, Wpk(2) is selected as a calculation formula for the warning threshold Wpk(N).

In FIG. 9, the pulse on time t_on of the contamination detection value is short with respect to the sensor rise time tr, and the contamination detection value does not rise to the maximum voltage. In this case, the value of the voltage proportional to the average output is calculated as the warning threshold Wpk(N) by Wpk(2) shown in formula (9) below. Wpk(2) is a calculation formula in which K(2) in the common formula is D/100.

[Formula 9]

$$Wpk(2)=P\times a\times (D/100)\times G+V0 \ \cdots \ (9)$$

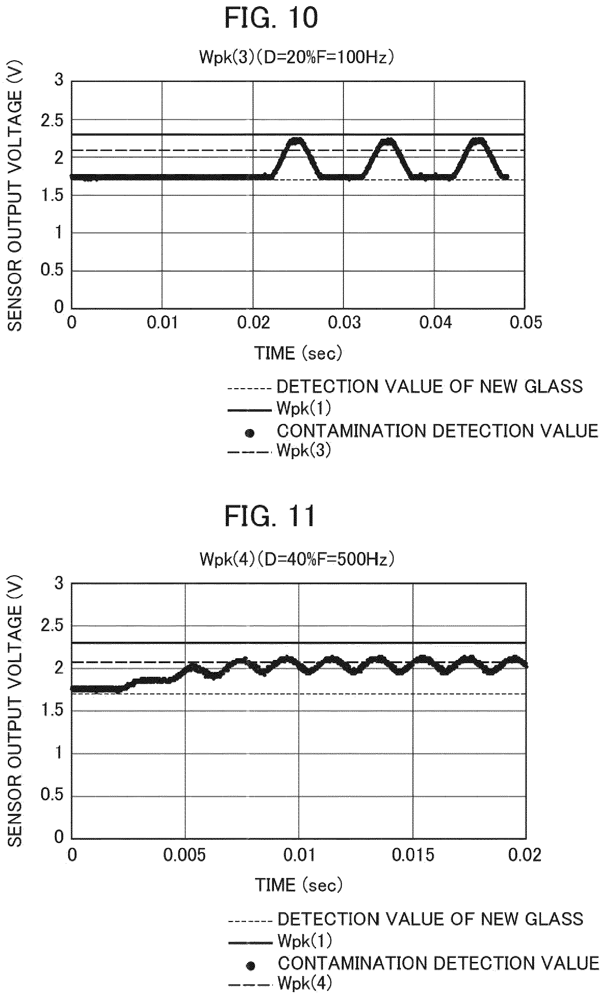

FIG. 10 is a graph showing changes in the detection value X (sensor output voltage) of the sensor 27 and a warning threshold Wpk(3) when the duty ratio of the laser beam is 20% and the pulse frequency is 100 Hz. In FIG. 10, Wpk(3) is selected as a calculation formula for the warning threshold Wpk(N).

In FIG. 10, the pulse on time t_on of the contamination detection value is short and the pulse off time t_off is long with respect to the sensor rise time tr. In this case, the value of the voltage proportional to the pulse on time t_on is calculated as the warning threshold Wpk(N) by Wpk(3) shown in formula (10) below. Wpk(3) is a calculation formula in which K(3) in the common formula is t_on/tr.

[Formula 10]

$$Wpk(3)=P\times a\times(t\_on/tr)\times G+V0 \ \ldots \ (10)$$

The pulse-on time t_on is determined by the following formula (11).

[Formula 11]

$$t\_on=(D/100)\times(1000/F)=D\times10/F \ \ldots \ (11)$$

FIG. 11 is a graph showing changes in the detection value X (sensor output voltage) of the sensor 27 and a warning threshold Wpk(4) when the duty ratio of the laser beam is 40% and the pulse frequency is 500 Hz. In FIG. 11, Wpk(4) is selected as a calculation formula for the warning threshold Wpk(N).

In FIG. 11, the pulse on time t_on of the contamination detection value is short and the pulse off time t_off is also short with respect to the sensor rise time tr. In this case, the value of the voltage proportional to the pulse on time t_on and the negative pulse off time t_off is calculated as the warning threshold Wpk(N) by Wpk(4) shown in formula (12) below. Wpk(4) is a calculation formula in which K(4) in the common formula is t_on/tr-t_off/tf+b/tr.

[Formula 12]

$$Wpk(4)=P\times a\times(t\_on/tr-t\_off/tf+b/tr)\times G+V0 \ \ldots \ (12)$$

The pulse-off time t_off is determined by the following formulas (13) and (14).

[Formula 13]

$$t\_off=T-t\_on \ \ldots \ (13)$$

[Formula 14]

$$T=1000/F \ \ldots \ (14)$$

In the above-described method, the contamination threshold setting unit 37 sets the warning threshold Wpk(N) and the alarm threshold Apk(N) as contamination thresholds for detecting the contamination 51 on the protective glass 25 from the detection value X of the scattered light SL detected by the sensor 27 based on the processing conditions of the laser processing machine acquired from the NC device 23. Thus, the contamination threshold suitable for the processing conditions of the laser processing machine can be set even when the amount of the scattered light SL scattered depending on the amount of the contamination 51 on the surface of the protective glass 25 changes according to the processing conditions of the laser processing machine.

Proceeding to step S15, the information acquisition unit 35 acquires information from the NC device 23 as to whether the NC device 23 has started laser processing. When the NC device 23 has started laser processing (YES in step S 15), the process proceeds to step S16. Meanwhile, when the NC device 23 has not started laser processing (NO in step S 15), the process returns to step S15.

In step S16, the sensor 27 detects scattered light SL from the end face of the protective glass 25 attached to the processing head 21 while the laser beam LB is irradiated. The detection signal of scattered light SL detected by the sensor 27, which is amplified by the analog IF circuit 31 and the high-frequency component (noise) thereof is cut, is converted from the analog signal to the digital signal by the AD converter 33, and output to the information acquisition unit 35 as the detection value X of the sensor 27. The information acquisition unit 35 acquires the detection value X from the AD converter 33.

Proceeding to step S17, the contamination determination unit 39 determines whether the detection value X exceeds the warning threshold Wpk(N) calculated in step S14. When the detection value X exceeds the warning threshold Wpk(N) (YES in step S 17), that is, when the detection value X is greater than the warning threshold Wpk(N), proceed to step S18. Meanwhile, when the detection value X is equal to or smaller than the warning threshold Wpk(N) (NO in step S 17), the process proceeds to step S21.

In step S18, the contamination determination unit 39 determines whether the detection value X exceeds the alarm threshold Apk(N) calculated in step S14. When the detection value X exceeds the alarm threshold Apk(N) (YES in step S 18), that is, when the detection value X is greater than the alarm threshold Apk(N), the process proceeds to step S20. Meanwhile, when the detection value X is equal to or smaller than the alarm threshold Apk(N) (NO in step S 18), the process proceeds to step S19.

In step S19, the contamination determination unit 39 transmits a warning determination signal to the NC device 23. In this case, the NC device 23 causes the display 23a to display a warning sign thereon. Then, the process proceeds to step S21.

In step S20, the contamination determination unit 39 transmits an alarm determination signal to the NC device 23. In this case, the NC device 23 causes the display 23a to display an alarm sign thereon. Further, the NC device 23 stops the processing by the laser processing machine. Then, the process proceeds to step S21.

In step S21, the information acquisition unit 35 acquires information from the NC device 23 as to whether the NC device 23 has finished laser processing. The protective glass contamination detection device ends the flow shown in FIG. 5 when the NC device 23 has finished laser processing (YES in step S 21). Meanwhile, when the NC device 23 has not finished laser processing (NO in step S 21), the process returns to step S16.

[Effect]

As described above, according to one aspect of the present invention, the following effect can be obtained.

In a laser processing machine, the protective glass contamination detection device that detects contamination on the protective glass 25 for protecting the focusing lens 19 for focusing the laser beam LB to irradiate the focused laser beam LB onto the workpiece W, includes a scattered light detection unit (sensor 27), an information acquisition unit 35, a contamination threshold setting unit 37, and a contamination determination unit 39. The scattered light detection unit detects the scattered light SL generated by the contamination 51 adhered to the protective glass 25. The information acquisition unit 35 acquires information on the processing conditions of the laser processing machine. The contamination threshold setting unit 37 sets a contamination threshold for detecting contamination on the protective glass 25 from the detection value X detected by the scattered light detection unit based on the processing conditions of the laser processing machine. The contamination determination unit 39 determines the degree of the contamination on the protective glass 25 based on the detection value X and the contamination threshold.

The contamination threshold setting unit 37 sets the contamination threshold for detecting the contamination on the protective glass based on the processing conditions of the laser processing machine. A contamination threshold suitable for the processing conditions can be set even when the amount of the scattered light SL scattered depending on the amount of the contamination 51 on the surface of the protective glass 25 changes according to the processing conditions. Thus, the contamination on the protective glass 25 of the laser processing machine can be properly detected according to the processing conditions. Defective products can be reduced during laser processing.

Processing conditions of the laser processing machine include items for adjusting an average output Pav per unit time of a laser beam LB emitted while processing. The amount of laser energy with which the protective glass 25 is irradiated changes when the average output Pav of the laser beam LB emitted while processing changes. By including an item for adjusting an average output Pav of laser beam LB in the processing conditions of the laser processing machine, a contamination threshold suitable for the processing condition can be set even when the amount of the scattered light SL scattered depending on the amount of the contamination 51 on the surface of the protective glass 25 changes according to the average output Pav of the laser beam LB irradiated onto the protective glass 25 while processing.

The processing condition of the laser processing machine includes items for the adjusting irradiation area of the laser beam LB irradiating the protective glass 25 while processing. The amount of laser energy with which the protective glass 25 is irradiated changes when irradiation area of the laser beam LB on the protective glass 25 changes. Thus, a contamination threshold suitable for processing conditions can be set even when the amount of the scattered light SL scattered depending on the amount of the contamination 51 on the surface of the protective glass 25 changes according to the irradiation area of the laser beam LB irradiating the protective glass 25.

The processing conditions of the laser processing machine acquired by the information acquisition unit 35 include the laser conditions of the laser beam LB emitted while processing. Further, the laser conditions of the laser beam LB include a laser peak output value P of the laser beam LB emitted while processing, a pulse frequency F of the laser beam LB, and a duty ratio D of the laser beam LB. Moreover, the beam diameter of the laser beam LB during the irradiation of workpiece W with the laser beam LB is variable from a beam waist diameter to the beam diameter greater than the beam waist diameter by changing the beam diameter or the focus position by an optical system element. The laser conditions of the laser beam LB include a gain correction value G indicating the degree of change in the beam diameter from the case where the beam diameter of the laser beam LB is the beam waist diameter to the case where the beam diameter is greater than the beam waist diameter.

The contamination threshold setting unit 37 can set a contamination threshold for detecting contamination on the protective glass 25 based on laser conditions such as the laser peak output value P, the pulse frequency F, the duty ratio D, and the gain correction value G of the laser beam LB emitted while processing. A contamination threshold suitable for the laser conditions can be set even when the amount of the scattered light SL scattered depending on the amount of the contamination 51 on the surface of the protective glass 25 changes according to the laser conditions while processing.

The processing conditions of the laser processing machine acquired by the information acquisition unit 35 include the sensor characteristics of the scattered light detection unit. Further, the sensor characteristics of the scattered light detection unit include a sensor rise time tr, which is a time required for the detection signal of the scattered light detection unit to reach the peak value from an initial voltage, a sensor fall time tf, which is a time required for the detection signal to fall from a peak value to the initial voltage, and a sampling frequency of the detection signal.

The contamination threshold setting unit 37 can set a contamination threshold for detecting contamination on the protective glass 25 based on the sensor characteristics such as the sensor rise time tr of the scattered light detection unit, the sensor fall time tf, and the sampling frequency of the detection signal. A contamination threshold suitable for the sensor characteristics can be set even when the amount of the scattered light SL scattered depending on the amount of the contamination 51 on the surface of the protective glass 25 changes according to the sensor characteristics of the scattered light detection unit.

The processing conditions of the laser processing machine acquired by the information acquisition unit 35 include the mechanical specifications of the laser processing machine emitting the laser beam LB. Moreover, the mechanical specifications of the laser processing machine emitting the laser beam LB include an arbitrary variable "b" determined by the mechanical specifications and the sensor specifications of the sensor 27, and an arbitrary variable "a" determined by the characteristics of the protective glass 25. Note that the arbitrary variable "b" is a variable that specifies a switching timing between the calculation formulas Wpk(3) and Wpk(4).

The contamination threshold setting unit 37 can set a contamination threshold for detecting contamination on the protective glass 25 based on the mechanical specifications of the laser processing machine, such as an arbitrary variable "b" determined by the mechanical specifications and the sensor specifications of the sensor 27 and specifies the switching timing between the calculation formulas Wpk(3) and Wpk(4), and an arbitrary variable "a" determined by the characteristics of the protective glass 25. The contamination threshold suitable for the mechanical specifications of the laser processing machine can be set even when the amount of the scattered light SL scattered depending on the amount of the contamination 51 on the surface of the protective glass 25 varies according to the mechanical specifications of the laser processing machine. Contaminations on the protective glass 25 can be detected even when the machine specifications are changed.

The contamination threshold setting unit 37 selects a contamination threshold calculation formula for setting the contamination threshold based on the processing conditions of the laser processing machine, and calculates the contamination threshold based on the selected contamination threshold calculation formula.

The contamination threshold setting unit 37 selects a contamination threshold calculation formula for calculating the contamination threshold suitable for the processing conditions based on the processing conditions of the laser processing machine. The contamination threshold setting unit 37 calculates the contamination threshold based on the selected contamination threshold calculation formula. Thus, the contamination threshold suitable for the processing conditions can be set based on the processing conditions of the laser processing machine.

This invention is not limited to the aforementioned embodiment of the invention, but can be implemented in other embodiments by appropriate modifications.

For example, the functions realized by the PLC 29 and the NC device 23 in the embodiment described above may be realized by other devices such as a robot controller.

In the embodiment described above, a single sensor 27 is mounted at a position for receiving the scattered light SL from an end surface of the protective glass 25, but the position of the sensor 27 may be a position other than a side face of the protective glass 25. Further, a plurality of sensors 27 may be mounted, for example, on a circumference formed by the side face of the protective glass 25. In this case, sensors having different sensor characteristics may be combine for the plurality of sensors 27, and the plurality of sensors 27 may be used separately for a warning and an alarm, for example. Moreover, a fiber may be attached in the vicinity of the protective glass 25, and the scattered light SL may be transmitted by the fiber to the sensor 27 located at a distance far from the protective glass 25.

The sensor gain of the sensor 27 may be changed from the outside. For example, the sensor gain of the sensor 27 may be changed from the outside so that a calculated contamination threshold is within a measurement range of the sensor 27 when the contamination threshold calculated based on the processing conditions is outside the measurement range of the sensor 27.

Furthermore, the contamination threshold may be set based on parameters different from parameters of the processing conditions of the laser processing machine used in the above embodiment. Further according to the present invention, a pulse width of the laser beam LB may be used instead of the duty ratio D of the laser beam LB. Defocus of the laser processing machine may be used instead of the gain correction value G determined by the beam diameter of the processing head 21.

Moreover, the protective glass contamination detection device and the protective glass contamination detection method according to the above embodiment may be applied when laser processing is performed by wobbling operation, and may be applied when a plurality of laser beams LB are incident on the protective glass 25. It may be applied when laser processing is performed by a hybrid laser. Furthermore, it may be applied when cutting is performed by a laser cutting machine.

**Claims**

1. A protective glass contamination detection device configured to detect contamination (51) on a protective glass (25) for protecting a focusing lens (19) for focusing a laser beam to irradiate the focused laser beam onto a workpiece (W) in a laser processing machine, comprising:

   a scattered light detection unit (27) configured to detect scattered light caused by the contamination (51) adhered to the protective glass (25);
   the protective glass contamination device being **characterised by**:

      an information acquisition unit (35) configured tc acquire information on processing conditions of the laser processing machine;
      a contamination threshold setting unit (37) configured to set a contamination threshold for detecting the contamination (51) on the protective glass (25) from a detection value detected by the scattered light detection unit (27) based on the processing conditions of the laser processing machine; and
      a contamination determination unit (39) configured to determine a degree of the contamination (51) on the protective glass (25) based on the detection value and the contamination threshold,
      and **in that:** the processing conditions of the laser processing machine include laser conditions of the laser beam emitted while processing, wherein
      the laser conditions include a laser peak output value of the laser beam emitted while processing, a pulse frequency of the laser beam, and a duty ratio of the laser beam, or include a laser peak output value of the laser beam emitted while processing, a pulse frequency of the laser beam, and a pulse width of the laser beam.

2. The protective glass contamination detection device according to claim 1, wherein the laser conditions of the laser beam include an item for adjusting an average output per unit time of the laser beam emitted while processing.

3. The protective glass contamination detection device according to claim 1, wherein the laser conditions of the laser beam include an item for adjusting an irradiation area of the laser beam irradiating the protective glass (25) while processing.

4. The protective glass contamination detection device according to any one of claims 1 to 3, wherein the processing conditions of the laser processing machine include sensor characteristics of the scattered light detection unit (27).

5. The protective glass contamination detection device according to any one of claims 1 to 4, wherein the processing conditions of the laser processing machine include machine specifications of the laser processing machine emitting the laser beam.

6. The protective glass contamination detection device according to any one of claims 1 to 5, wherein
   the contamination threshold setting unit (37) is configured to select a contamination threshold calculation formula for setting the contamination threshold based on the processing conditions of the laser processing machine, and to calculate the contamination threshold based on the selected contamination threshold calculation formula.

7. The protective glass contamination detection device according to claim 1, wherein

   a beam diameter of the laser beam during irradiation of the upper surface of the workpiece (W) with the laser beam is variable from a beam waist diameter to a beam diameter greater than the beam waist diameter by changing the beam diameter or changing a focus position by an optical system element; and
   the laser conditions of the laser beam include a gain correction value indicating a degree of change in the beam diameter from a case where the beam diameter of the laser beam is the beam waist diameter to a case where the beam diameter is greater than the beam waist diameter.

8. The protective glass contamination detection device according to claim 4, wherein the sensor characteristics of the scattered light detection unit (27) include a sensor rise time, which is a time required for a detection signal of the scattered light detection unit (27) to reach a peak value from an initial voltage, a sensor fall time, which is a time required for the detection signal to fall from the peak value to the initial voltage, and a sampling frequency of the detection signal.

9. The protective glass contamination detection device according to claim 5, wherein mechanical specifications of the laser processing machine emitting the laser beam include an arbitrary variable determined by the mechanical specifications of the laser processing machine emitting the laser beam and sensor specifications of the scattered light detection unit (27), and an arbitrary variable determined by the characteristics of the protective glass (25).

10. A protective glass contamination detection method of detecting contamination (51) on a protective glass (25) for protecting a focusing lens (25) for focusing a laser beam to irradiate the focused laser beam onto a workpiece (W) in a laser processing machine, comprising:

    detecting scattered light caused by the contamination (51) adhered to the protective glass (25);
    the protective glass contamination detection method being **characterised by** the following steps:

    acquiring information on processing conditions of the laser processing machine;
    setting a contamination threshold for detecting the contamination (51) on the protective glass (25) from a detection value detected for the scattered light based on the processing conditions of the laser processing machine; and
    determining a degree of the contamination (51) on the protective glass (25) based on the detection value of the scattered light and the contamination threshold,
    and **in that:** the processing conditions of the laser processing machine include laser conditions of the laser beam emitted while processing; wherein
    the laser conditions include a laser peak output value of the laser beam emitted while processing, a pulse frequency of the laser beam, and a duty ratio of the laser beam, or include a laser peak output value of the laser beam emitted while processing, a pulse frequency of the laser beam, and a pulse width of the laser beam.

## Patentansprüche

1. Vorrichtung zur Erkennung einer Verschmutzung eines Schutzglases, die eingerichtet ist, eine Verschmutzung (51) auf einem Schutzglas (25) zu erkennen, das zum Schutz einer Fokussierlinse (19) zum Fokussieren eines Laserstrahls zum Bestrahlen des fokussierten Laserstrahls auf ein Werkstück (W) in einer Laserbearbeitungsmaschine vorgesehen ist, umfassend:

    eine Streulichterfassungseinheit (27), die eingerichtet ist, Streulicht zu erfassen, das durch die an dem Schutzglas (25) anhaftende Verschmutzung (51) verursacht wird;
    wobei die Vorrichtung zur Erkennung einer Verschmutzung eines Schutzglases **dadurch gekennzeichnet ist, dass** sie umfasst:

    eine Informationserfassungseinheit (35), die eingerichtet ist, Informationen über Bearbeitungsbedingungen der Laserbearbeitungsmaschine zu erfassen;
    eine Verschmutzungsschwellenwert-Einstelleinheit (37), die eingerichtet ist, einen Verschmutzungsschwellenwert für das Erkennen der Verschmutzung (51) auf dem Schutzglas (25) aus einem Detektionswert festzulegen, der durch die Streulichterfassungseinheit (27) basierend auf den Bearbeitungsbedingungen der Laserbearbeitungsmaschine erfasst wird; und
    eine Verschmutzungsbestimmungseinheit (39), die eingerichtet ist, einen Grad der Verschmutzung (51) auf dem Schutzglas (25) basierend auf dem Detektionswert und dem Verschmutzungsschwellenwert zu bestimmen,
    und dadurch, dass die Bearbeitungsbedingungen der Laserbearbeitungsmaschine Laserbedingungen des während der Bearbeitung emittierten Laserstrahls umfassen, wobei
    die Laserbedingungen einen Spitzenleistungswert des während der Bearbeitung emittierten Laserstrahls, eine Pulsfrequenz des Laserstrahls und ein Tastverhältnis des Laserstrahls umfassen, oder einen Spitzenleistungswert des während der Bearbeitung emittierten Laserstrahls, eine Pulsfrequenz des Laserstrahls und eine Pulsdauer des Laserstrahls umfassen.

2. Vorrichtung zur Erkennung einer Verschmutzung eines Schutzglases nach Anspruch 1, wobei die Laserbedingungen des Laserstrahls ein Element zum Einstellen einer mittleren Leistung pro Zeiteinheit des während der Bearbeitung emittierten Laserstrahls umfassen.

3. Vorrichtung zur Erkennung einer Verschmutzung eines Schutzglases nach Anspruch 1, wobei die Laserbedingungen des Laserstrahls ein Element zum Einstellen einer Bestrahlungsfläche des Schutzglases (25) durch den Laserstrahl während der Bearbeitung umfassen.

4. Vorrichtung zur Erkennung einer Verschmutzung eines Schutzglases nach einem der Ansprüche 1 bis 3, wobei die Bearbeitungsbedingungen der Laserbearbeitungsmaschine Sensorcharakteristika der Streulichterfassungseinheit (27) umfassen.

5. Vorrichtung zur Erkennung einer Verschmutzung eines Schutzglases nach einem der Ansprüche 1 bis 4, wobei die Bearbeitungsbedingungen der Laserbearbeitungsmaschine Maschinenspezifikationen der die Laserstrahlung emittierenden Laserbearbeitungsmaschine umfassen.

6. Vorrichtung zur Erkennung einer Verschmutzung eines Schutzglases nach einem der Ansprüche 1 bis 5, wobei die Verschmutzungsschwellenwert-Einstelleinheit (37) eingerichtet ist, eine Berechnungsformel für den Verschmutzungsschwellenwert auszuwählen, um den Verschmutzungsschwellenwert basierend auf den Bearbeitungsbedingungen der Laserbearbeitungsmaschine festzulegen, und um den Verschmutzungsschwellenwert basierend auf der ausgewählten Berechnungsformel für den Verschmutzungsschwellenwert zu berechnen.

7. Vorrichtung zur Erkennung einer Verschmutzung eines Schutzglases nach Anspruch 1, wobei

ein Strahldurchmesser des Laserstrahls während der Bestrahlung der Oberseite des Werkstücks (W) mit dem Laserstrahl variierbar ist von einem Strahltaille-Durchmesser zu einem Strahldurchmesser, der größer als der Strahltaille-Durchmesser ist, durch Ändern des Strahldurchmessers oder Ändern einer Fokusposition durch ein optisches Systemelement; und
die Laserbedingungen des Laserstrahls einen Verstärkungskorrekturwert umfassen, der einen Grad der Änderung des Strahldurchmessers von einem Fall, in dem der Strahldurchmesser des Laserstrahls der Strahltaille-Durchmesser ist, zu einem Fall angibt, in dem der Strahldurchmesser größer als der Strahltaille-Durchmesser ist.

8. Vorrichtung zur Erkennung einer Verschmutzung eines Schutzglases nach Anspruch 4, wobei die Sensorcharakteristika der Streulichterfassungseinheit (27) eine Sensoranstiegszeit umfassen, die eine Zeit ist, die erforderlich ist, damit ein Detektionssignal der Streulichterfassungseinheit (27) einen Spitzenwert von einer Anfangsspannung erreicht, eine Sensorsenkzeit, die eine Zeit ist, die erforderlich ist, damit das Detektionssignal vom Spitzenwert zur Anfangsspannung abfällt, und eine Abtastfrequenz des Detektionssignals.

9. Vorrichtung zur Erkennung einer Verschmutzung eines Schutzglases nach Anspruch 5, wobei mechanische Spezifikationen der die Laserstrahlung emittierenden Laserbearbeitungsmaschine eine beliebige Variable umfassen, die durch die mechanischen Spezifikationen der die Laserstrahlung emittierenden Laserbearbeitungsmaschine und die Spezifikationen des Sensors der Streulichterfassungseinheit (27) bestimmt ist, und eine beliebige Variable, die durch die Charakteristika des Schutzglases (25) bestimmt ist.

10. Verfahren zur Erkennung einer Verschmutzung (51) auf einem Schutzglas (25) zum Schutz einer Fokussierlinse (25) zum Fokussieren eines Laserstrahls zum Bestrahlen des fokussierten Laserstrahls auf ein Werkstück (W) in einer Laserbearbeitungsmaschine, umfassend:

Erfassen von Streulicht, das durch die an dem Schutzglas (25) anhaftende Verschmutzung (51) verursacht wird; wobei das Verfahren zur Erkennung einer Verschmutzung eines Schutzglases durch die folgenden Schritte gekennzeichnet ist:

Erfassen von Informationen über Bearbeitungsbedingungen der Laserbearbeitungsmaschine;
Festlegen eines Verschmutzungsschwellenwerts für das Erkennen der Verschmutzung (51) auf dem Schutzglas (25) aus einem Detektionswert, der für das Streulicht basierend auf den Bearbeitungsbedingungen der Laserbearbeitungsmaschine erfasst wird; und

Bestimmen eines Grads der Verschmutzung (51) auf dem Schutzglas (25) basierend auf dem Detektionswert des Streulichts und dem Verschmutzungsschwellenwert, und

dadurch, dass die Bearbeitungsbedingungen der Laserbearbeitungsmaschine Laserbedingungen des während der Bearbeitung emittierten Laserstrahls umfassen, wobei

die Laserbedingungen einen Spitzenleistungswert des während der Bearbeitung emittierten Laserstrahls, eine Pulsfrequenz des Laserstrahls und ein Tastverhältnis des Laserstrahls umfassen, oder einen Spitzenleistungswert des während der Bearbeitung emittierten Laserstrahls, eine Pulsfrequenz des Laserstrahls und eine Pulsdauer des Laserstrahls umfassen.

## Revendications

1. Dispositif de détection de contamination d'un verre de protection, configuré pour détecter une contamination (51) sur un verre de protection (25) destiné à protéger une lentille de focalisation (19) servant à focaliser un faisceau laser pour irradier le faisceau laser focalisé sur une pièce (W) dans une machine de traitement laser, comprenant :

   une unité de détection de lumière diffusée (27) configurée pour détecter une lumière diffusée causée par la contamination (51) adhérant au verre de protection (25) ;
   le dispositif de détection de contamination d'un verre de protection étant **caractérisé par** :

   une unité d'acquisition d'information (35) configurée pour acquérir de l'information sur les conditions de traitement de la machine de traitement laser ;
   une unité de réglage du seuil de contamination (37) configurée pour régler un seuil de contamination afin de détecter la contamination (51) sur le verre de protection (25) à partir d'une valeur de détection détectée par l'unité de détection de lumière diffusée (27) sur la base des conditions de traitement de la machine de traitement laser ; et
   une unité de détermination de contamination (39) configurée pour déterminer un degré de contamination (51) sur le verre de protection (25) sur la base de la valeur de détection et du seuil de contamination,
   et **caractérisé en ce que** : les conditions de traitement de la machine de traitement laser incluent les conditions laser du faisceau laser émis pendant le traitement, dans lequel
   les conditions laser incluent une valeur de puissance laser de crête du faisceau laser émis pendant le traitement, une fréquence d'impulsion du faisceau laser, et un rapport cyclique du faisceau laser, ou incluent une valeur de puissance laser de crête du faisceau laser émis pendant le traitement, une fréquence d'impulsion du faisceau laser, et une largeur d'impulsion du faisceau laser.

2. Dispositif de détection de contamination d'un verre de protection selon la revendication 1, dans lequel les conditions laser du faisceau laser incluent un élément permettant de régler la puissance moyenne du faisceau laser émis pendant le traitement.

3. Dispositif de détection de contamination d'un verre de protection selon la revendication 1, dans lequel les conditions laser du faisceau laser incluent un élément permettant de régler une zone d'irradiation du faisceau laser irradiant le verre de protection (25) pendant le traitement.

4. Dispositif de détection de contamination d'un verre de protection selon l'une quelconque des revendications 1 à 3, dans lequel les conditions de traitement de la machine de traitement laser incluent les caractéristiques du capteur de l'unité de détection de lumière diffusée (27).

5. Dispositif de détection de contamination d'un verre de protection selon l'une quelconque des revendications 1 à 4, dans lequel les conditions de traitement de la machine de traitement laser incluent les spécifications de la machine de traitement laser émettant le faisceau laser.

6. Dispositif de détection de contamination d'un verre de protection selon l'une quelconque des revendications 1 à 5, dans lequel
   l'unité de réglage du seuil de contamination (37) est configurée pour sélectionner une formule de calcul du seuil de contamination afin de régler le seuil de contamination sur la base des conditions de traitement de la machine de traitement laser, et pour calculer le seuil de contamination sur la base de la formule de calcul du seuil de contamination sélectionnée.

7. Dispositif de détection de contamination d'un verre de protection selon la revendication 1, dans lequel le diamètre de faisceau du faisceau laser durant l'irradiation de la surface supérieure de la pièce (W) avec le faisceau laser est variable, allant du diamètre du col de faisceau à un diamètre de faisceau supérieur au diamètre du col de faisceau en modifiant le diamètre du faisceau ou la position du foyer à l'aide d'un élément de système optique ; et les conditions laser du faisceau laser incluent une valeur de correction de gain indiquant un degré de changement du diamètre de faisceau, depuis un cas où le diamètre de faisceau du faisceau laser est égal au diamètre du col de faisceau jusqu'à un cas où le diamètre de faisceau est supérieur au diamètre du col de faisceau.

8. Dispositif de détection de contamination d'un verre de protection selon la revendication 4, dans lequel les caractéristiques du capteur de l'unité de détection de lumière diffusée (27) incluent un temps de montée du capteur, qui est le temps nécessaire pour qu'un signal de détection de l'unité de détection de lumière diffusée (27) atteigne une valeur de crête à partir d'une tension initiale, un temps de descente du capteur, qui est le temps nécessaire pour que le signal de détection chute de la valeur de crête à la tension initiale, et une fréquence d'échantillonnage du signal de détection.

9. Dispositif de détection de contamination d'un verre de protection selon la revendication 5, dans lequel les spécifications mécaniques de la machine de traitement laser émettant le faisceau laser incluent une variable arbitraire déterminée par les spécifications mécaniques de la machine de traitement laser émettant le faisceau laser et les spécifications du capteur de l'unité de détection de lumière diffusée (27), et une variable arbitraire déterminée par les caractéristiques du verre de protection (25).

10. Procédé de détection de contamination d'un verre de protection destiné à détecter une contamination (51) sur un verre de protection (25) servant à protéger une lentille de focalisation (25) pour focaliser un faisceau laser afin d'irradier un faisceau laser focalisé sur une pièce (W) dans une machine de traitement laser, comprenant :

   la détection de la lumière diffusée causée par la contamination (51) adhérant au verre de protection (25) ;
   le procédé de détection d'une contamination du verre de protection étant **caractérisé par** les étapes suivantes :

      acquisition d'information sur les conditions de traitement de la machine de traitement laser ;
      définition d'un seuil de contamination pour détecter la contamination (51) sur le verre de protection (25) à partir d'une valeur de détection détectée pour la lumière diffusée sur la base des conditions de traitement de la machine de traitement laser ; et
      détermination du degré de contamination (51) sur le verre de protection (25) sur la base de la valeur de détection de la lumière diffusée et du seuil de contamination,
      et **caractérisé en ce que** : les conditions de traitement de la machine de traitement laser incluent les conditions laser du faisceau laser émis pendant le traitement ; dans lequel
      les conditions laser incluent une valeur de puissance laser de crête du faisceau laser émis pendant le traitement, une fréquence d'impulsion du faisceau laser, et un rapport cyclique du faisceau laser, ou incluent une valeur de puissance laser de crête du faisceau laser émis pendant le traitement, une fréquence d'impulsion du faisceau laser, et une largeur d'impulsion du faisceau laser.

FIG. 1

# FIG. 2

# FIG. 3

# FIG. 4

# FIG. 5

START

ACQUIRE LASER CONDITIONS — S10

ACQUIRE INFORMATION ON SENSOR CHARACTERISTICS — S11

ACQUIRE INFORMATION ON MECHANICAL SPECIFICATIONS — S12

SELECT CALCULATION FORMULA OF CONTAMINATION THRESHOLD — S13

CALCULATE WARNING THRESHOLD Wpk (N) AND ALARM THRESHOLD Apk (N) — S14

START PROCESSING? — S15
NO
YES

ACQUIRE DETECTION VALUE OF SENSOR — S16

DOES DETECTION VALUE OF SENSOR EXCEED Wpk (N)? — S17
YES
NO

DOES DETECTION VALUE OF SENSOR EXCEED ALARM THRESHOLD Apk (N)? — S18
YES
NO

TRANSMIT WARNING DETERMINATION SIGNAL — S19

TRANSMIT ALARM DETERMINATION SIGNAL — S20

FINISHED PROCESSING? — S21
NO
YES

END

22

FIG. 6

FIG. 7

# FIG. 8

Wpk(1)(D=30% F=10Hz)

------- DETECTION VALUE OF NEW GLASS
● CONTAMINATION DETECTION VALUE
——— Wpk(1)

# FIG. 9

Wpk(2)(D=40% F=5000Hz)

------- DETECTION VALUE OF NEW GLASS
——— Wpk(1)
● CONTAMINATION DETECTION VALUE
——— Wpk(2)

## FIG. 10

### Wpk(3)(D=20%F=100Hz)

DETECTION VALUE OF NEW GLASS
Wpk(1)
● CONTAMINATION DETECTION VALUE
Wpk(3)

## FIG. 11

### Wpk(4)(D=40%F=500Hz)

DETECTION VALUE OF NEW GLASS
Wpk(1)
● CONTAMINATION DETECTION VALUE
Wpk(4)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001509889 W
- JP 2020151752 A
- EP 2540432 A1

- WO 2003076117 A1
- JP 2018075610 A